# EUROPEAN PATENT SPECIFICATION

(11) **EP 3 744 958 B1**
(45) Date of publication and mention of the grant of the patent: **28.06.2023**
(21) Application number: 19211929.5
(22) Date of filing: 27.11.2019
(51) Int. Cl.: F02C 7/236, F02C 9/26

(54) **FUEL SYSTEM WITH INTEGRATED THRUST CONTROL MALFUNCTION PROTECTION AND METHOD**
KRAFTSTOFFSYSTEM MIT INTEGRIERTEM SCHUBSTEUERUNGSFEHLFUNKTIONSSCHUTZ UND VERFAHREN
SYSTÈME DE CARBURANT COMPORTANT UNE PROTECTION INTÉGRÉE CONTRE LE MAUVAIS FONCTIONNEMENT DE LA COMMANDE DE POUSSÉE ET PROCÉDÉ

(30) Priority: 31.05.2019 US 201916428822
(43) Date of publication of application: 02.12.2020
(73) Proprietor: Hamilton Sundstrand Corporation, Charlotte, NC 28217-4578 (US)
(72) Inventor: REUTER, Charles E., Granby, CT Connecticut 06035 (US); SUSCA, Ryan, Windsor, CT Connecticut 06095 (US)
(74) Representative: Dehns

(56) References cited:
- US-A1- 2005 066 648
- US-B1- 6 401 446
- US-B1- 6 434 473
- US-B1- 7 878 003
- US-B2- 7 845 177

## Description

### Background

### Technological Field

The present disclosure relates to a fuel, and more particularly to fuel system having overspeed and thrust control malfunction protection.

### Description of Related Art

A variety of systems are known in the fuel metering and fuel control field. In addition to metering fuel flow, gas turbine fuel controls must provide safety functions to assure that that the engine and aircraft operate at safe conditions. Two required safety protection functions are Overspeed (O/S) and Thrust Control Malfunction (TCM). Overspeed protection typically requires rapidly reducing fuel flow to zero, while TCM must reduce flow to an intermediate value.

The conventional methods and systems have generally been considered satisfactory for their intended purpose. However, there is still a need in the art for fuel systems having improved complexity and reliability. There also remains a need in the art for such fuel systems and components that are economically viable. The present disclosure may provide a solution for at least one of these remaining challenges. US 6401446 B1 relates to a valve apparatus for providing shutoff and overspeed protection in a gas turbine fuel system.

### Summary of the Invention

A fuel system with integrated thrust control malfunction and overspeed protection is defined in claim 1 and includes a high pressure centrifugal pump configured to receive filtered fuel and supply fuel to a metering and pressure regulating valve, wherein the metering and pressure regulating valve is configured to meter discharge of filtered fuel flow to a gas generator burner, a shut off valve downstream of the metering and pressure regulating valve movable from an open position to a fully closed position configured to provide rapid fuel flow shutoff or to a fixed intermediate position configured to reduce fuel flow to the gas turbine burner, and first solenoid and a second solenoid for controlling the shut off valve position. The first solenoid reduces fuel flow to the engine burner by translating the shut off valve to an intermediate position between the open position and the closed position.

Optionally, the first solenoid acts independent of the second solenoid and the second solenoid acts independent of the first solenoid. Optionally, the first solenoid provides a pressure to a spring side of the shut off valve to activate the shut off valve to an intermediate position. Optionally, the second solenoid provides a pressure to a spring side of the shut off valve to activate the shut off valve to the closed position using a second overspeed valve. Optionally, the second overspeed valve is fluidly connected to the first solenoid and to the second solenoid.

Optionally, the intermediate position is fixed and is based on a location of a middle feedback window of the valve spool.

Optionally, the second solenoid is fluidly connected to a pressure port of the second overspeed valve.

A method of overspeed and thrust control malfunction protection is defined in claim 9 and includes monitoring a speed of an engine and at least one aircraft characteristic using a controller or Full Authority Digital Engine Control (FADEC), detecting an engine overspeed or a thrust control malfunction, and actuating a shutoff valve from an open position to a either second intermediate position by energizing a first solenoid, thereby reducing the fuel flow to the engine burner for thrust control malfunction accommodation or actuating a shutoff valve to a closed position shutting off fuel flow to the engine burner for accommodation of a overspeed. The second position is partially closed.

These and other features of the systems and methods of the subject disclosure will become more readily apparent to those skilled in the art from the following detailed description of the preferred embodiments taken in conjunction with the drawings.

### Brief Description of the Drawings

So that those skilled in the art to which the subject invention appertains will readily understand how to make and use the devices and methods of the subject invention without undue experimentation, preferred embodiments thereof will be described in detail herein below with reference to certain figures, wherein:

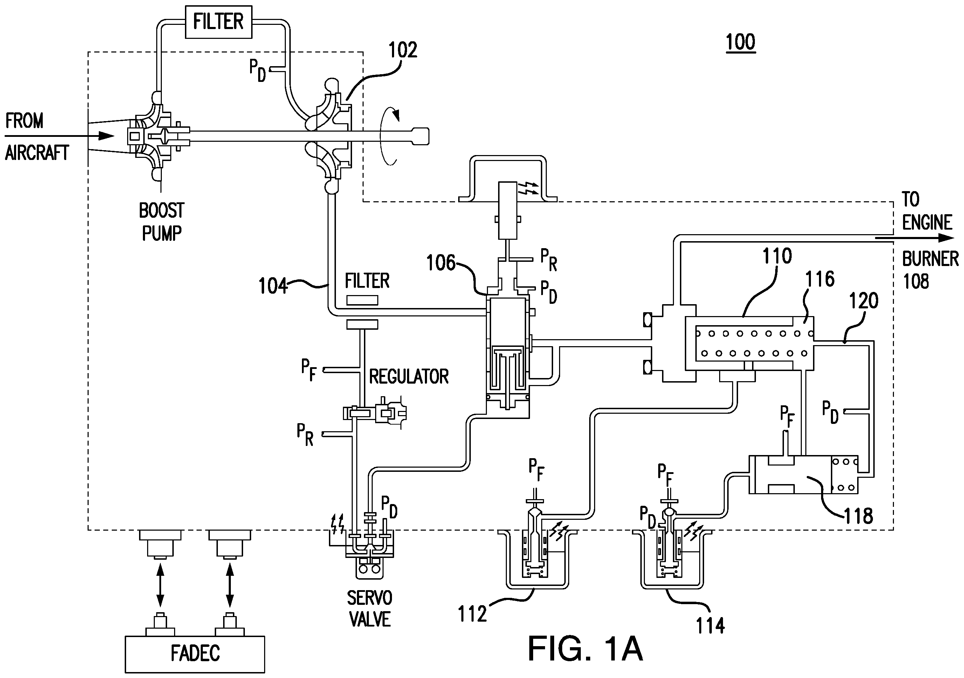

Fig. 1a is schematic view of a fuel system, showing normal operation;

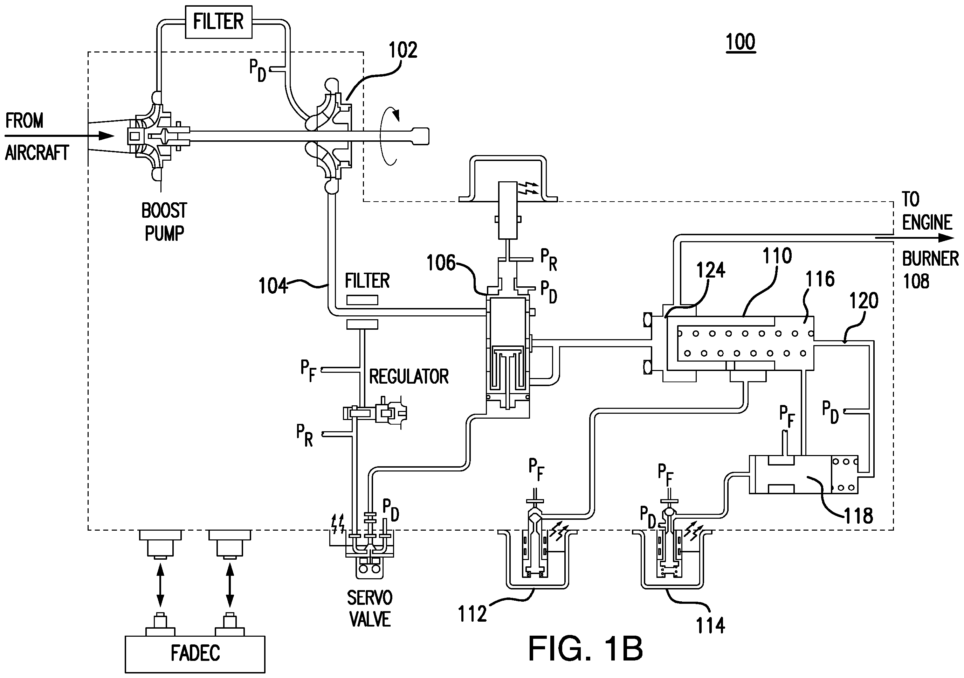

Fig. 1b is a schematic view of Fig. 1a, showing the fuel system in thrust control malfunction mode; and

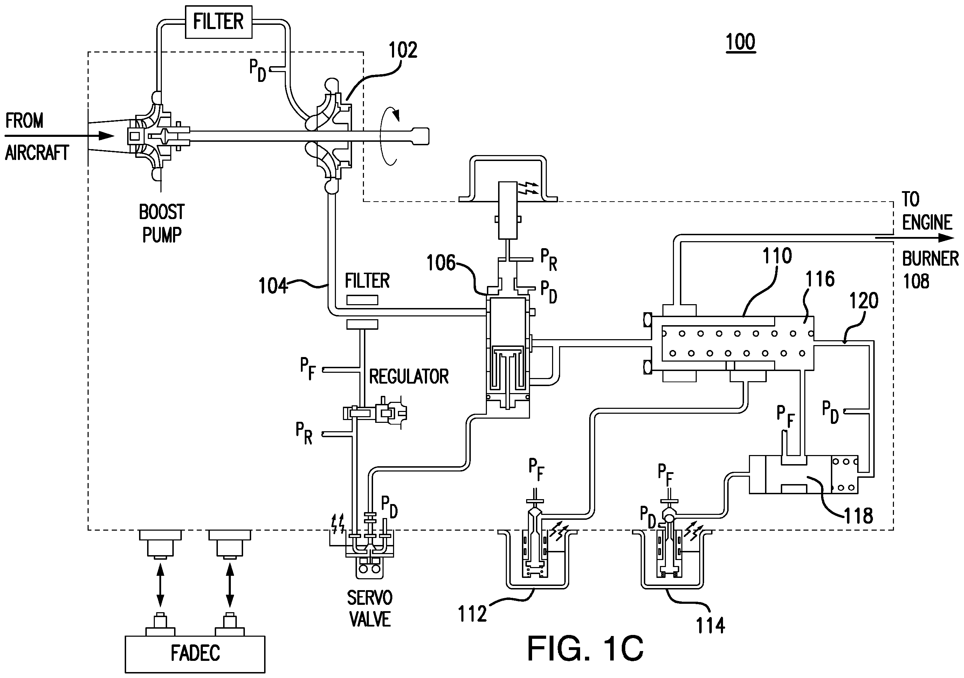

Fig. 1c is a schematic view of Fig. 1a, showing the fuel system in overspeed protection mode.

### Detailed Description

Reference will now be made to the drawings wherein like reference numerals identify similar structural features or aspects of the subject invention. For purposes of explanation and illustration, and not limitation, a partial view of an exemplary embodiment of a fuel system in accordance with the invention is shown in Fig. 1a and is designated generally by reference character 100. Other aspects of the fuel system, are provided in FIGS. 1b and 1c, as will be described. The methods and systems of the invention can be used to better control fuel supply in thrust control malfunction (TCM) and overspeed (O/S) events.

Referring to Fig. 1a, a fuel system 100 with integrated thrust control malfunction and overspeed protection includes a high pressure centrifugal pump 102 for receiving high pressure fuel 104 and supplying fuel to a metering and pressure regulating valve (MPRV) 106, the MPRV 106 configured for metering discharge of filtered fuel flow to a gas turbine burner or the engine of the aircraft 108. A shut off valve (SOV) 110 is placed downstream of the MPRV 106 which is movable from an open position to a fully closed position and configured for providing rapid shutoff to the gas turbine burner 108 in response to an overspeed event and moveable from an open position to an intermediate position for reduction of fuel flow to the gas turbine burner 108 in response to a TCM event. A first TCM solenoid 112 and a second O/S solenoid 114 for controlling the shut off valve position are used for translating the shut valve 110 from between open / TCM and O/S positions. The first, TCM, solenoid 112 is responsible for positioning the shut off valve 110 to the intermediate position by controlling the flow of filtered pump discharge pressure (Pf) through a feedback window 122 in the shutoff valve 110 to the spring side 116 of the shut off valve 110 to a Damping and Pressure Raising Orifice 120 and returns to pump inlet pressure (Pd).

The second, O/S, solenoid 114 activates the shut off valve 110 to the closed position by translating a second overspeed valve 118. The second overspeed valve 118 is fluidly connected to the second solenoid 114. The first solenoid 112 acts independent of the second solenoid 114 and the second solenoid 114 acts independent of the first solenoid 112. Each solenoid is commanded individually by the Full Authority Digital Engine Control (FADEC). The FADEC controls the activation of each solenoid. If a thrust control malfunction event occurs, the FADEC recognizes the situation and activates the TCM solenoid 112. If an overspeed event is detected or the pilot commands shutdown the FADEC will activate the overspeed shutdown solenoid 114.

Referring to Fig 1b, if a TCM event is detected the first solenoid 112 is activated by controller (FADEC) and reduces fuel flow to the burner 108 by translating the shut off valve 110 to the intermediate position located between the open position and the closed position. The intermediate position can be a fixed location. The intermediate position of the valve is based on the location of the TCM feedback window 122 of the valve spool. The first solenoid 112 is connected to the shutoff valve through the middle land in the valve spool. The second solenoid 114 is connected to the valve via the overspeed valve which is connected to the end of the shut off valve through the spring cavity. This structure enables both thrust reduction and thrust shutoff to be controlled by the same shut off valve.

Activating the TCM solenoid 112 connects Pf pressure to the backside of the valve 110 via the TCM feedback window 122 resulting in flow across the damping and pressure raising orifice 120. Flow through this orifice increases pressure on the spring side of the SOV 110. This pressure will cause the valve to translate towards the closed position. The intermediate position of the valve is based on the location of the TCM window 122 of the valve spool and metering edge in the valve sleeve. In this position, the SOV 110 provides a fixed restriction in series with the metering valve. By providing a fixed restriction in series with the metering valve, the effective area of the metering flow path is reduced and therefore flow to the burner is reduced. The first solenoid 112 is fluidly connected to a pressure port of the shut off a valve and to a feedback window of the shut off valve and then to the Damping and Pressure Raising Orifice 120. As the valve closes, it also closes the window 122 that connects Pf to the backside of the valve. This reduces the flow through the window 122 and through Damping and Pressure Raising Orifice 120 which in turn reduces the pressure 116 on the backside of the valve. As the valve closes, pressure continues to reduce until the valve eventually reaches an equilibrium point, where the area of the remaining open window 122 provides just enough pressure to hold the valve in the intermediate position. If the window 122 were to close further the pressure would drop and the valve would be out of pressure balance causing the valve to open again until pressure balance is again achieved.

Referring to Fig. 1c, if an overspeed event is detected, the second solenoid 114 is activated to translate the shut off valve 110 to the closed position. When activated, the solenoid switches the pressure to the overspeed valve 118 from main pump inlet pressure (Pd) to main pump filtered discharge pressure (Pf). Pf pressure causes the second valve 118 to stroke to open and port high Pf pressure to spring side of the shutoff valve 110 to shutdown flow. This arrangement amplifies the solenoid output flow thereby allowing a high flow rate to the spring side of the SOV 116 with the use of smaller solenoid, otherwise a solenoid sized large enough to satisfy the required output flow would be slower, resulting in slower shutdown time in response to an Overspeed event. It is expected that shut off valve is required to close in 50 ms or less.

A method of thrust control malfunction and overspeed detection is also disclosed. While an electronic controller (FADEC) is monitoring the speed of the engine, if an overspeed of a predetermined speed setting is detected or if overspeed is sensed due to other failure (e.g., engine shaft shear detected by shaft speed sensors that detect speeds at opposite ends of the shaft), the controller (FADEC) will activate the overspeed solenoid 114. The controller (FADEC) will also sense a thrust control malfunction event, by taking into account at least one aircraft characteristic such as altitude/power setting/flight regime and make a decision to reduce the fuel flow to the engine rather than shut it down. If the thrust control malfunction criteria is satisfied, the controller (FADEC) will actuate a shutoff valve from an open position to a second position by energizing a TCM solenoid, thereby reducing the fuel flow to the engine burner and having the thrust of the aircraft be reduced. When the TCM solenoid is energized, TCM (thrust reduction) accommodation happens (flow reduction). When the O/S solenoid is energized, O/S accommodation happen (flow off). When both solenoids are energized, O/S accommodation occurs. In other words, O/S has priority over TCM.

The structure of the second solenoid, TCM feedback window 122 and the SOV metering window 124 defines a fixed, known position of SOV in a state such that flow to the engine burner is predetermined to be slightly above idle. The system has very high hydraulic spring rate which makes it such that no vibratory issues when closing

The methods and systems of the present disclosure, as described above and shown in the drawings, provide for fuel metering system with superior properties including increased reliability and reduced size, weight, complexity, and/or cost. While the apparatus and methods of the subject disclosure have been showing and described with reference to embodiments, those skilled in the art will readily appreciate that changes and/or modifications may be made thereto without departing from the scope of the subject disclosure.

## Claims

1. A fuel system (100) with integrated thrust control malfunction and overspeed protection comprising:
a centrifugal pump (102) for receiving filtered fuel and supplying fuel to a metering and pressure regulating valve (106), wherein the metering and pressure regulating valve (106) is configured to meter discharge of filtered fuel flow to a gas generator burner;
a shut off valve (110) downstream of the metering and pressure regulating valve movable from an open position to a fully closed position configured to provide rapid fuel flow shutoff or to a fixed intermediate position configured to reduce fuel flow to the gas generator burner; and
a first solenoid (112) and a second solenoid (114) for controlling the shut off valve position;
**characterized in that** the first solenoid (112) provides a pressure to a spring side of the shut off valve (110) through a metering window (124) on a shut off valve spool to activate the shut off valve (110) to an intermediate position.

2. The fuel system of claim 1, wherein the first solenoid (112) acts independent of the second solenoid (114).

3. The fuel system of any preceding claim, wherein the second solenoid (114) acts independent of the first solenoid (112).

4. The fuel system of any preceding claim, wherein the second solenoid (114) provides a pressure to a spring side of the shut off valve (110) to activate the shut off valve (110) to the closed position using a second overspeed valve (118).

5. The fuel system of any preceding claim, wherein the first solenoid (112) reduces fuel flow to the engine burner by translating the shut off valve (110) to an intermediate position between the open position and the closed position.

6. The fuel system of any preceding claim, wherein the intermediate position is fixed.

7. The fuel system of claim 6, wherein the intermediate position of the valve is based on a location of a middle window of the valve spool and a metering edge on the valve sleeve.

8. The fuel system of claim 5, wherein the second solenoid (114) is fluidly connected to a pressure port of the shut off valve (110) and to a feedback window (122) of the shut off valve (110).

9. A method of thrust control malfunction and overspeed protection comprising:
monitoring a speed of an engine and at least one aircraft characteristic using a controller (FADEC);
detecting an engine overspeed or a thrust control malfunction; and
actuating a pressure shutoff valve (110) from an open position to a second position by energizing a solenoid, thereby reducing the fuel flow to the gas generator burner;
**characterized in that** the second position is partially closed.

10. The method of claim 9, wherein a thrust of the engine is reduced.

11. The method of any of claims 9 to 10, wherein the fuel flow is shut off.

12. The method of any of claims 9 to 11, further comprising energizing a second solenoid, in order to actuate the pressure shutoff valve to a position different than the second position, and optionally wherein the second solenoid takes precedence over the first solenoid in actuating the shut off valve.

## Patentansprüche

1. Kraftstoffsystem (100) mit integriertem Schubsteuerungsfehlfunktions- und Überdrehzahlschutz, umfassend:
eine Zentrifugalpumpe (102) zum Aufnehmen von gefiltertem Kraftstoff und zum Zuführen von Kraftstoff zu einem Dosier- und Druckregelventil (106), wobei das Dosier- und Druckregelventil (106) dazu konfiguriert ist, eine Abgabe eines gefilterten Kraftstoffstroms zu einem Gasgeneratorbrenner zu dosieren;
ein Absperrventil (110) stromabwärts des Dosier- und Druckregelventils, das von einer offenen Position in eine vollständig geschlossene Position, die dazu konfiguriert ist, eine schnelle Absperrung eines Kraftstoffstroms bereitzustellen, oder in eine feststehende Zwischenposition, die dazu konfiguriert ist, um einen Kraftstoffstrom zu dem Gasgeneratorbrenner zu reduzieren, bewegbar ist; und
einen ersten Elektromagneten (112) und einen zweiten Elektromagneten (114) zum Steuern der Absperrventilposition;
**dadurch gekennzeichnet, dass** der erste Elektromagnet (112) einen Druck auf eine Federseite des Absperrventils (110) durch ein Dosierfenster (124) auf einem Absperrventilschieber bereitstellt, um das Absperrventil (110) in eine Zwischenposition zu betätigen.

2. Kraftstoffsystem nach Anspruch 1, wobei der erste Elektromagnet (112) unabhängig von dem zweiten Elektromagneten (114) agiert.

3. Kraftstoffsystem nach einem der vorhergehenden Ansprüche, wobei der zweite Elektromagnet (114) unabhängig von dem ersten Elektromagneten (112) agiert.

4. Kraftstoffsystem nach einem der vorhergehenden Ansprüche, wobei der zweite Elektromagnet (114) einen Druck auf eine Federseite des Absperrventils (110) bereitstellt, um das Absperrventil (110) unter Verwendung eines zweiten Überdrehzahlventils (118) in die geschlossene Position zu betätigen.

5. Kraftstoffsystem nach einem der vorhergehenden Ansprüche, wobei der erste Elektromagnet (112) einen Kraftstoffstrom zu dem Triebwerksbrenner reduziert, indem er das Absperrventil (110) in eine Zwischenposition zwischen der offenen Position und der geschlossenen Position verschiebt.

6. Kraftstoffsystem nach einem der vorhergehenden Ansprüche, wobei die Zwischenposition feststehend ist.

7. Kraftstoffsystem nach Anspruch 6, wobei die Zwischenposition des Ventils auf einer Stelle eines mittleren Fensters des Ventilschiebers und einer Dosierkante an der Ventilhülse basiert.

8. Kraftstoffsystem nach Anspruch 5, wobei der zweite Elektromagnet (114) fluidisch mit einem Druckanschluss des Absperrventils (110) und mit einem Rückkopplungsfenster (122) des Absperrventils (110) verbunden ist.

9. Verfahren zum Schubsteuerungsfehlfunktions- und Überdrehzahlschutz, umfassend:
Überwachen einer Drehzahl eines Triebwerks und mindestens einer Luftfahrzeugeigenschaft unter Verwendung einer Steuerung (FADEC);
Erkennen einer Triebwerksüberdrehzahl oder einer Schubsteuerungsfehlfunktion; und
Antreiben eines Druckabsperrventils (110) von einer offenen Position in eine zweite Position durch Erregen eines Elektromagneten, wodurch der Kraftstoffstrom zu dem Gasgeneratorbrenner reduziert wird; **dadurch gekennzeichnet, dass** die zweite Position teilweise geschlossen ist.

10. Verfahren nach Anspruch 9, wobei ein Schub des Triebwerks reduziert wird.

11. Verfahren nach einem der Ansprüche 9 bis 10, wobei der Kraftstoffstrom abgesperrt wird.

12. Verfahren nach einem der Ansprüche 9 bis 11, ferner Erregen eines zweiten Elektromagneten umfassend, um das Druckabsperrventil in eine andere Position als die zweite Position anzutreiben, und wobei optional der zweite Elektromagnet Vorrang vor dem ersten Elektromagneten beim Antreiben des Absperrventils hat.

## Revendications

1. Système de carburant (100) comportant une protection intégrée contre le mauvais fonctionnement de la commande de poussée et les survitesses, comprenant :
une pompe centrifuge (102) pour recevoir du carburant filtré et fournir du carburant à une vanne de dosage et de régulation de pression (106), dans lequel la vanne de dosage et de régulation de pression (106) est configurée pour mesurer la décharge du flux de carburant filtré vers un brûleur de générateur de gaz ;
une vanne d'arrêt (110) en aval de la vanne de dosage et de régulation de pression mobile d'une position ouverte à une position complètement fermée configurée pour fournir une coupure rapide du flux de carburant, ou à une position intermédiaire fixe configurée pour réduire le flux de carburant vers le brûleur de générateur de gaz ; et
un premier solénoïde (112) et un second solénoïde (114) pour commander la position de la vanne d'arrêt ;
**caractérisé en ce que** le premier solénoïde (112) fournit une pression à un côté ressort de la vanne d'arrêt (110) à travers une fenêtre de mesure (124) sur un tiroir de vanne d'arrêt pour activer la vanne d'arrêt (110) dans une position intermédiaire.

2. Système de carburant selon la revendication 1, dans lequel le premier solénoïde (112) agit indépendamment du second solénoïde (114).

3. Système de carburant selon une quelconque revendication précédente, dans lequel le second solénoïde (114) agit indépendamment du premier solénoïde (112).

4. Système de carburant selon une quelconque revendication précédente, dans lequel le second solénoïde (114) fournit une pression à un côté ressort de la vanne d'arrêt (110) pour activer la vanne d'arrêt (110) en position fermée à l'aide d'une seconde vanne de survitesse (118).

5. Système de carburant selon une quelconque revendication précédente, dans lequel le premier solénoïde (112) réduit le flux de carburant vers le brûleur de moteur en déplaçant la vanne d'arrêt (110) vers une position intermédiaire entre la position ouverte et la position fermée.

6. Système de carburant selon une quelconque revendication précédente, dans lequel la position intermédiaire est fixe.

7. Système de carburant selon la revendication 6, dans lequel la position intermédiaire de la vanne est basée sur un emplacement d'une fenêtre médiane du tiroir de vanne et d'un bord de dosage sur le manchon de vanne.

8. Système de carburant selon la revendication 5, dans lequel le second solénoïde (114) est relié fluidiquement à un orifice de pression de la vanne d'arrêt (110) et à une fenêtre de rétroaction (122) de la vanne d'arrêt (110).

9. Procédé de protection contre le mauvais fonctionnement de la commande de poussée et les survitesses, comprenant :
la surveillance d'une vitesse d'un moteur et au moins une caractéristique d'aéronef à l'aide d'un dispositif de commande (FADEC) ;
la détection d'un surrégime moteur ou d'un mauvais fonctionnement de la commande de poussée ; et
l'actionnement d'une vanne d'arrêt de pression (110) d'une position ouverte à une seconde position en alimentant un solénoïde, réduisant ainsi le flux de carburant vers le brûleur de générateur de gaz ; **caractérisé en ce que** la seconde position est partiellement fermée.

10. Procédé selon la revendication 9, dans lequel une poussée du moteur est réduite.

11. Procédé selon l'une quelconque des revendications 9 et 10, dans lequel le flux de carburant est coupé.

12. Procédé selon l'une quelconque des revendications 9 à 11, comprenant en outre l'alimentation d'un second solénoïde, afin d'actionner la vanne d'arrêt de pression dans une position différente de la seconde position, et éventuellement dans lequel le second solénoïde a priorité sur le premier solénoïde pour actionner la vanne d'arrêt.
